(19)

**Europäisches Patentamt**
**European Patent Office**
**Office européen des brevets**

(11)     **EP 2 964 365 B1**

(12)                                **EUROPEAN PATENT SPECIFICATION**

(45) Date of publication and mention
of the grant of the patent:
**28.07.2021   Bulletin 2021/30**

(51) Int Cl.:
**B01D 53/94** (2006.01)        **B01J 35/04** (2006.01)

(21) Application number: **14705407.6**

(22) Date of filing: **14.02.2014**

(86) International application number:
**PCT/GB2014/050445**

(87) International publication number:
**WO 2014/125296 (21.08.2014 Gazette 2014/34)**

(54) **POSITIVE IGNITION ENGINE AND EXHAUST SYSTEM COMPRISING THREE-WAY CATALYSED FILTER**

FREMDGEZÜNDETER MOTOR UND ABGASSYSTEM MIT EINEM KATALYSIERTEN DREIWEGFILTER

MOTEUR À ALLUMAGE COMMANDÉ ET SYSTÈME D'ÉCHAPPEMENT COMPRENANT UN FILTRE CATALYSÉ TRIFONCTIONNEL

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **15.02.2013   GB 201302686**
            **18.02.2013   GB 201302786**
            **19.02.2013   US 201361766374 P**

(43) Date of publication of application:
**13.01.2016   Bulletin 2016/02**

(73) Proprietor: **Johnson Matthey Public Limited Company**
**London EC4A 4AB (GB)**

(72) Inventors:
• **CLOWES, Lucy**
  **Royston**
  **Hertfordshire SG8 5HE (GB)**
• **DESTECROIX, Oliver**
  **Royston**
  **Hertfordshire SG8 5HE (GB)**

• **GOODWIN, John Benjamin**
  **Royston**
  **Hertfordshire SG8 7XH (GB)**
• **GREENWELL, David**
  **Lower Cambourne**
  **Cambridgeshire CB23 6BX (GB)**
• **HOWARD, Michael Anthony**
  **Royston**
  **Hertfordshire SG8 7XH (GB)**
• **SCOTNEY, Christopher Charles John**
  **Royston**
  **Hertfordshire SG8 5HE (GB)**

(74) Representative: **Nunn, Andrew Dominic**
**Johnson Matthey PLC**
**Gate 20**
**Orchard Road**
**Royston, Hertfordshire SG8 5HE (GB)**

(56) References cited:
**EP-A1- 2 650 042         US-A1- 2009 193 796**
**US-A1- 2011 252 773**

• **None**

**Description**

The present invention relates to a filter for filtering particulate matter from exhaust gas emitted from a vehicular positive ignition internal combustion engine, which filter is coated at least in part with a three-way catalyst washcoat comprising a platinum group metal and a plurality of solid particles. In particular, the invention relates to such a filter where low back-pressure filtration is important but at the same time three-way catalyst activity is required.

Positive ignition engines cause combustion of a hydrocarbon and air mixture using spark ignition. Contrastingly, compression ignition engines cause combustion of a hydrocarbon by injecting the hydrocarbon into compressed air. Positive ignition engines can be fuelled by gasoline fuel, gasoline fuel blended with oxygenates including methanol and/or ethanol, liquid petroleum gas or compressed natural gas. Positive ignition engines can be stoichiometrically operated engines or lean-burn operated engines.

A three-way catalyst (TWC) typically contains one or more platinum group metals, particularly those selected from the group consisting of platinum, palladium and rhodium.

TWCs are intended to catalyse three reactions simultaneously: (i) oxidation of carbon monoxide to carbon dioxide, (ii) oxidation of unburned hydrocarbons to carbon dioxide and water; and (iii) reduction of nitrogen oxides to nitrogen and oxygen. These three reactions occur most efficiently when the TWC receives exhaust gas from an engine running at or about the stoichiometric point. As is well known in the art, the quantity of carbon monoxide (CO), unburned hydrocarbons (HC) and nitrogen oxides ($NO_x$) emitted when gasoline fuel is combusted in a positive ignition (e.g. spark-ignited) internal combustion engine is influenced predominantly by the air-to-fuel ratio in the combustion cylinder. An exhaust gas having a stoichiometrically balanced composition is one in which the concentrations of oxidising gases ($NO_x$ and $O_2$) and reducing gases (HC and CO) are substantially matched. The air-to-fuel ratio that produces this stoichiometrically balanced exhaust gas composition is typically given as 14.7: 1.

Theoretically, it should be possible to achieve complete conversion of $O_2$, $NO_x$, CO and HC in a stoichiometrically balanced exhaust gas composition to $CO_2$, $H_2O$ and $N_2$ (and residual $O_2$) and this is the duty of the TWC. Ideally, therefore, the engine should be operated in such a way that the air-to-fuel ratio of the combustion mixture produces the stoichiometrically balanced exhaust gas composition.

A way of defining the compositional balance between oxidising gases and reducing gases of the exhaust gas is the lambda ($\lambda$) value of the exhaust gas, which can be defined according to equation (1) as:

$$\text{Actual engine air-to-fuel ratio/Stoichiometric engine air-to-fuel ratio,} \qquad (1)$$

wherein a lambda value of 1 represents a stoichiometrically balanced (or stoichiometric) exhaust gas composition, wherein a lambda value of >1 represents an excess of $O_2$ and $NO_x$ and the composition is described as "lean" and wherein a lambda value of <1 represents an excess of HC and CO and the composition is described as "rich". It is also common in the art to refer to the air-to-fuel ratio at which the engine operates as "stoichiometric", "lean" or "rich", depending on the exhaust gas composition which the air-to-fuel ratio generates: hence stoichiometrically-operated gasoline engine or lean-burn gasoline engine.

It should be appreciated that the reduction of $NO_x$ to $N_2$ using a TWC is less efficient when the exhaust gas composition is lean of stoichiometric. Equally, the TWC is less able to oxidise CO and HC when the exhaust gas composition is rich. The challenge, therefore, is to maintain the composition of the exhaust gas flowing into the TWC at as close to the stoichiometric composition as possible.

Of course, when the engine is in steady state it is relatively easy to ensure that the air-to-fuel ratio is stoichiometric. However, when the engine is used to propel a vehicle, the quantity of fuel required changes transiently depending upon the load demand placed on the engine by the driver. This makes controlling the air-to-fuel ratio so that a stoichiometric exhaust gas is generated for three-way conversion particularly difficult. In practice, the air-to-fuel ratio is controlled by an engine control unit, which receives information about the exhaust gas composition from an exhaust gas oxygen (EGO) (or lambda) sensor: a so-called closed loop feedback system. A feature of such a system is that the air-to-fuel ratio oscillates (or perturbates) between slightly rich of the stoichiometric (or control set) point and slightly lean, because there is a time lag associated with adjusting air-to-fuel ratio. This perturbation is characterised by the amplitude of the air-to-fuel ratio and the response frequency (Hz).

The active components in a typical TWC comprise one or both of platinum and palladium in combination with rhodium, or even palladium only (no rhodium), supported on a high surface area oxide, and an oxygen storage component.

When the exhaust gas composition is slightly rich of the set point, there is a need for a small amount of oxygen to consume the unreacted CO and HC, i.e. to make the reaction more stoichiometric. Conversely, when the exhaust gas goes slightly lean, the excess oxygen needs to be consumed. This was achieved by the development of the oxygen storage component that liberates or absorbs oxygen during the perturbations. The most commonly used oxygen storage component (OSC) in modern TWCs is cerium oxide ($CeO_2$) or a mixed oxide containing cerium, e.g. a Ce/Zr mixed oxide.

Ambient PM is divided by most authors into the following categories based on their aerodynamic diameter (the aerodynamic diameter is defined as the diameter of a 1 g/cm$^3$ density sphere of the same settling velocity in air as the measured particle):

(i) PM-10 - particles of an aerodynamic diameter of less than 10 $\mu$m ;
(ii) Fine particles of diameters below 2.5 $\mu$m (PM-2.5);
(iii) Ultrafine particles of diameters below 0.1 $\mu$m (or 100 nm); and
(iv) Nanoparticles, characterised by diameters of less than 50 nm.

Since the mid-1990's, particle size distributions of particulates exhausted from internal combustion engines have received increasing attention due to possible adverse health effects of fine and ultrafine particles. Concentrations of PM-10 particulates in ambient air are regulated by law in the USA. A new, additional ambient air quality standard for PM-2.5 was introduced in the USA in 1997 as a result of health studies that indicated a strong correlation between human mortality and the concentration of fine particles below 2.5 $\mu$m.

Interest has now shifted towards nanoparticles generated by diesel and gasoline engines because they are understood to penetrate more deeply into human lungs than particulates of greater size and consequently they are believed to be more harmful than larger particles, extrapolated from the findings of studies into particulates in the 2.5-10.0 $\mu$m range.

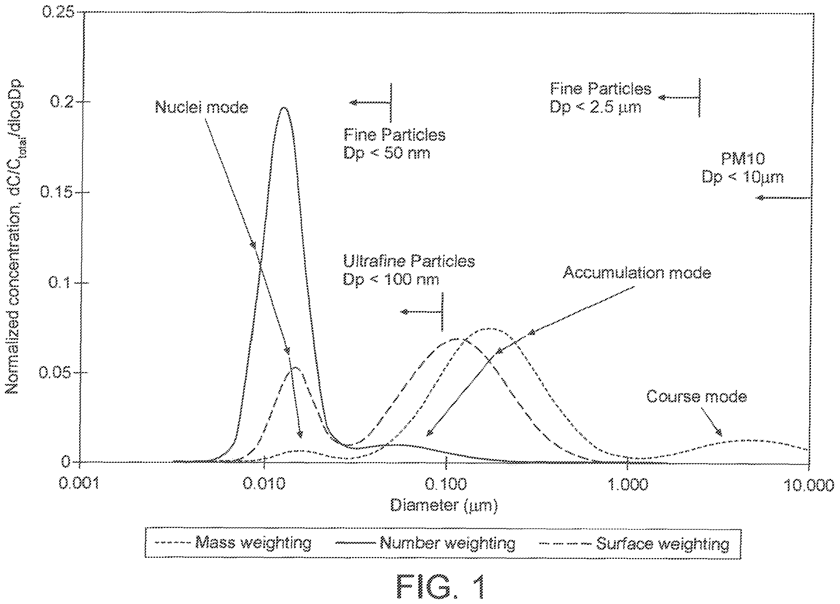

Size distributions of diesel particulates have a well-established bimodal character that correspond to the particle nucleation and agglomeration mechanisms, with the corresponding particle types referred to as the nuclei mode and the accumulation mode respectively (see Figure 1). As can be seen from Figure 1, in the nuclei mode, diesel PM is composed of numerous small particles holding very little mass. Nearly all diesel particulates have sizes of significantly less than 1 $\mu$m, i.e. they comprise a mixture of fine, i.e. falling under the 1997 US law, ultrafine and nanoparticles.

Nuclei mode particles are believed to be composed mostly of volatile condensates (hydrocarbons, sulfuric acid, nitric acid etc.) and contain little solid material, such as ash and carbon. Accumulation mode particles are understood to comprise solids (carbon, metallic ash etc.) intermixed with condensates and adsorbed material (heavy hydrocarbons, sulfur species, nitrogen oxide derivatives etc.) Coarse mode particles are not believed to be generated in the diesel combustion process and may be formed through mechanisms such as deposition and subsequent re-entrainment of particulate material from the walls of an engine cylinder, exhaust system, or the particulate sampling system. The relationship between these modes is shown in Figure 1.

The composition of nucleating particles may change with engine operating conditions, environmental condition (particularly temperature and humidity), dilution and sampling system conditions. Laboratory work and theory have shown that most of the nuclei mode formation and growth occur in the low dilution ratio range. In this range, gas to particle conversion of volatile particle precursors, like heavy hydrocarbons and sulfuric acid, leads to simultaneous nucleation and growth of the nuclei mode and adsorption onto existing particles in the accumulation mode. Laboratory tests (see e.g. SAE 980525 and SAE 2001-01-0201) have shown that nuclei mode formation increases strongly with decreasing air dilution temperature but there is conflicting evidence on whether humidity has an influence.

Generally, low temperature, low dilution ratios, high humidity and long residence times favour nanoparticles formation and growth. Studies have shown that nanoparticles consist mainly of volatile material like heavy hydrocarbons and sulfuric acid with evidence of solid fraction only at very high loads.

Contrastingly, engine-out size distributions of gasoline particulates in steady state operation show a unimodal distribution with a peak of about 60-80nm (see e.g. Figure 4 in SAE 1999-01-3530). By comparison with diesel size distribution, gasoline PM is predominantly ultrafine with negligible accumulation and coarse mode.

Particulate collection of diesel particulates in a diesel particulate filter is based on the principle of separating gas-borne particulates from the gas phase using a porous barrier. Diesel filters can be defined as deep-bed filters and/or surface-type filters. In deep-bed filters, the mean pore size of filter media is bigger than the mean diameter of collected particles. The particles are deposited on the media through a combination of depth filtration mechanisms, including diffusional deposition (Brownian motion), inertial deposition (impaction) and flow-line interception (Brownian motion or inertia).

In surface-type filters, the pore diameter of the filter media is less than the diameter of the PM, so PM is separated by sieving. Separation is done by a build-up of collected diesel PM itself, which build-up is commonly referred to as "filtration cake" and the process as "cake filtration".

It is understood that diesel particulate filters, such as ceramic wallflow monoliths, may work through a combination of depth and surface filtration: a filtration cake develops at higher soot loads when the depth filtration capacity is saturated and a particulate layer starts covering the filtration surface. Depth filtration is characterized by somewhat lower filtration efficiency and lower pressure drop than the cake filtration.

Emission legislation in Europe from 1st September 2014 (Euro 6) requires control of the number of particles emitted from both diesel and gasoline (positive ignition) passenger cars. For gasoline EU light duty vehicles the allowable limits are: 1000mg/km carbon monoxide; 60mg/km nitrogen oxides ($NO_x$); 100mg/km total hydrocarbons (of which $\leq$ 68mg/km are non-methane hydrocarbons); and 4.5mg/km particulate matter ((PM) for direct injection engines only). A PM number standard limit of $6.0 \times 10^{11}$ per km has been set for Euro 6, although an Original Equipment Manufacturer may request a limit of $6 \times 10^{12}$ km$^{-1}$ until 2017. In a practical sense, the range of particulates that are legislated for are between 23 nm and 3 $\mu$m.

In the United States, on 22nd March 2012, the State of California Air Resources Board (CARB) adopted new Exhaust Standards from 2017 and subsequent model year "LEV III" passenger cars, light-duty trucks and medium-duty vehicles which include a 3mg/mile emission limit, with a later introduction of 1mg/mi possible, as long as various interim reviews deem it feasible.

The new Euro 6 emission standard presents a number of challenging design problems for meeting gasoline emission standards. In particular, how to design a filter, or an exhaust system including a filter, for reducing the number of PM gasoline (positive ignition) emissions, yet at the same time meeting the emission standards for non-PM pollutants such as one or more of oxides of nitrogen ($NO_x$), carbon monoxide (CO) and unburned hydrocarbons (HC), all at an acceptable back pressure, e.g. as measured by maximum on-cycle backpressure on the EU drive cycle.

PM generated by positive ignition engines has a significantly higher proportion of ultrafine, with negligible accumulation and coarse mode compared with that produced by diesel (compression ignition) engines, and this presents challenges to removing it from positive ignition engine exhaust gas in order to prevent its emission to atmosphere. In particular, since a majority of PM derived from a positive ignition engine is relatively small compared with the size distribution for diesel PM, it is not practically possible to use a filter substrate that promotes positive ignition PM surface-type cake filtration because the relatively low mean pore size of the filter substrate that would be required would produce impractically high backpressure in the system.

Furthermore, generally it is not possible to use a conventional wallflow filter, designed for trapping diesel PM, for promoting surface-type filtration of PM from a positive ignition engine in order to meet relevant emission standards because there is generally less PM in positive ignition exhaust gas, so formation of a soot cake is less likely; and positive ignition exhaust gas temperatures are generally higher, which can lead to faster removal of PM by oxidation, thus preventing increased PM removal by cake filtration. Depth filtration of positive ignition PM in a conventional diesel wallflow filter is also difficult because the PM is significantly smaller than the pore size of the filter medium. Hence, in normal operation, an uncoated conventional diesel wallflow filter will have a lower filtration efficiency when used with a positive ignition engine than a compression ignition engine.

Another difficulty is combining filtration efficiency with a washcoat loading, e.g. of catalyst for meeting emission standards for non-PM pollutants, at acceptable backpressures. Diesel wallflow particulate filters in commercially available vehicles today have a mean pore size of about 13$\mu$m. However, we have found that washcoating a filter of this type at a sufficient catalyst loading such as is described in US 2006/0133969 to achieve required gasoline (positive ignition) emission standards can cause unacceptable backpressure.

In order to reduce filter backpressure it is possible to reduce the length of the substrate. However, there is a finite level below which the backpressure increases as the filter length is reduced. Suitable filter lengths for filters according to the present invention are from 2-12 inches long (5.1-30.5 cm), preferably 3-6 inches (7.6-15.2 cm) long. Cross sections can be circular and in our development work we have used 4.66 and 5.66 inch (11.8 cm and 14.4cm) diameter filters. However, cross-section can also be dictated by space on a vehicle into which the filter is required to fit. So for filters located in the so-called close coupled position, e.g. within 50 cm of the engine exhaust manifold where space is at a premium, elliptical or oval filter cross sections can be contemplated. As would be expected, backpressure also increases with washcoat loading and soot loading.

There have been a number of recent efforts to combine TWCs with filters for meeting the Euro 6 emission standards.

US 2009/0193796 discloses an emission treatment system downstream of a gasoline direct injection engine for treatment of an exhaust gas comprising hydrocarbons, carbon monoxide, nitrogen oxides and particulates, the emission treatment system comprising a catalysed particulate trap comprising a three-way conversion (TWC) catalyst coated onto or within a particulate trap. In the description and Examples provided, a catalyst coating (also referred to as a layer or layered catalyst composite) is prepared from a slurry mixture of a solution of desired precious metal compounds and at least one support material, such as finely divided, high surface area, refractory metal oxide. The slurry mixture is comminuted, e.g. in a ball mill or other similar equipment, to result in substantially all of the solids having particle sizes of less than about 20$\mu$m, i.e. between about 0.1-15$\mu$m in an average diameter [known as "D50"]. In the Examples, comminution by milling of alumina was done so that the particle size of 90% [known as "D90"] of the particles was 8-10$\mu$m. Comminution of a ceria-zirconia composite was done by milling to a D90 particle size of <5$\mu$m.

US 2011/252773 discloses exhaust systems and components suitable for use in conjunction with gasoline engines to capture particulates in addition to reducing gaseous emission such as hydrocarbons, nitrogen oxides, and carbon monoxides. Exhaust treatment systems comprising a three-way conversion (TWC) catalyst coated on a particulate filters are disclosed having washcoat loadings in the range of 1 to 4 g/ft3 result. Sufficient to high levels of oxygen storage components (OSC) are also included on and/or within the filter. The filters have a coated porosity that is substantially the same as its uncoated porosity. The TWC catalytic material comprises a particle size distribution such that a first set of particles has a first d90 particle size of 7.5 $\mu$m or less and a second set of particles has a second d90 particle size of more than 7.5 $\mu$m.

Our inventors have considered the use of washcoat compositions comprising milled cerium/zirconium mixed oxides for use in three-way catalysts for coating filters, such as those disclosed in US 2009/0193796, for low back-pressure applications. Very surprisingly, our inventors found that by milling cerium/zirconium mixed oxides, although the backpressure decreased with decreasing D50 of the cerium/zirconium mixed oxide, simultaneously, the three-way catalyst activity was significantly reduced, particularly for CO and $NO_x$ emissions. Following further research, our inventors found that this problem could be met by using a cerium/zirconium sol material instead of milling cerium/zirconium mixed oxides to a desired particle size. Back pressure can also be reduced by using non-cerium/zirconium mixed oxide sub-micron base metal oxide components either in combination with sub-micron cerium/zirconium mixed oxide components and/or cerium/zirconium mixed oxides having a median particle size >1$\mu$m.

By "sol" herein we mean colloidal suspension of very small solid particles in a continuous liquid medium.

Accordingly, according to a first aspect, the present invention provides a positive ignition engine comprising an exhaust system for a vehicular positive ignition internal combustion engine, which exhaust system comprising a filter for filtering particulate matter from exhaust gas emitted from the vehicular positive ignition internal combustion engine , which filter comprising a porous substrate having inlet surfaces and outlet surfaces, wherein the porous substrate is coated at least in part with a three-way catalyst washcoat comprising a platinum group metal and a plurality of solid particles, wherein the plurality of solid particles comprise at least one base metal oxide and an oxygen storage component which is a mixed oxide comprising cerium and zirconium having a median particle size less than 1$\mu$m, which mixed oxide is derived from a colloidal suspension of very small solid particles in a continuous liquid medium, wherein the platinum group metal is selected from the group consisting of:

(a) platinum and rhodium;
(b) palladium and rhodium;
(c) platinum, palladium and rhodium;
(d) palladium only; or
(e) rhodium only.

The positive ignition engine can be a stoichiometrically operated positive ignition engine or a lean-burn positive ignition engine.

"Composite oxide" as defined herein with reference to the at least one base metal oxide means a largely amorphous oxide material comprising oxides of at least two elements which are not true mixed oxides consisting of the at least two elements.

For the avoidance of doubt, the median particle size (D50) and D90 measurements were obtained by Laser Diffraction Particle Size Analysis using a Malvern Mastersizer 2000, which is a volume-based technique (i.e. D50 and D90 may also be referred to as $D_V50$ and $D_V90$ (or D(v,0.50) and D(v,0.90)) and applies a mathematical Mie theory model to determine a particle size distribution. Diluted washcoat samples were prepared by sonication in distilled water without surfactant for 30 seconds at 35 watts.

It is envisaged that a minimum of particle reduction for a three-way catalysed particulate filter to meet the Euro 6 PM number standard relative to an equivalent flowthrough catalyst is ≥50%. Additionally, while some backpressure increase for a three-way catalysed wallflow filter relative to an equivalent flowthrough catalyst is inevitable, in our experience peak backpressure over the MVEG-B drive cycle (average over three tests from "fresh") for a majority of passenger vehicles should be limited to <2000Pa (<200 mbar), such as <1800Pa (<180 mbar), <1500Pa (<150 mbar) and preferably <1200Pa (<120 mbar) e.g. <1000Pa (<100 mbar).

A proportion of cerium oxide present in the mixed oxide comprising cerium oxide and zirconium oxide can be from 20 wt % to 60 wt %, preferably from 20 wt % to 40 wt %, most preferably from 25 to 35 wt %. That is, the mixed oxide consists of oxides of cerium and zirconium. A proportion of zirconium oxide present in the mixed oxide comprising cerium oxide and zirconium oxide can be from 40 wt % to 80wt%. It is preferred to include more zirconium oxide than cerium oxide in the mixed oxide comprising cerium oxide and zirconium oxide because the resulting combination has been found to have kinetically faster oxygen storage activity, wherein oxygen is either adsorbed from exhaust gas slightly lean of stoichiometric or is released in contact with exhaust gas slightly rich of stoichiometric.

The mixed oxide comprising cerium can be formed by techniques such as co-gelling, co- precipitation, plasma spraying, flame spray pyrolysis and the like. Any other suitable technique for preparing the mixed oxide comprising cerium can be used provided that the resultant product contains the cerium and one or more additional non-cerium elements dispersed throughout the matrix of the particle in the finished product. Such techniques are distinguished from those that merely disperse e.g. zirconia on the surface of ceria particles or only within a surface layer, thereby leaving a substantial core of the ceria particle without zirconia dispersed therein. Suitable techniques for forming co-precipitated ceria-zirconia is disclosed in US patent no. 5057483 and US patent no. 5898014.

According to the invention, (i) both the mixed oxide comprising cerium and zirconium and the at least one base metal oxide can have a median particle size (D50) less than $1\mu m$; or (ii) the mixed oxide comprising cerium and zirconium can have a median particle size less than $1\mu m$ and the at least one base metal oxide can have a median particle size greater than $1\mu m$.

When the median particle size (D50) of the mixed oxide comprising cerium and zirconium and optionally also the at least one base metal oxide is less than $1\mu m$ it is present in the form of a sol, although they may also be used as a suspension of particles maintained by suitable dispersing agents (not in accordance with the claims). Mean particle sizes (D50) of mixed oxides comprising cerium and zirconium can be <500nm, e.g. from 100-300nm, such as <$250\mu m$. D90 values are typically <750 nm, such as 250-500nm e.g. <450nm. Such D90 values can be independent of the above mentioned D50 values or dependent, i.e. the particle sizes can have both the D50 and D90 values mentioned hereinabove, e.g. both a D50 of from <500nm and a D90 of <$750\mu m$.

Cerium and zirconium salts are also useful for forming the mixed oxides comprising cerium and zirconium including cerium and zirconium chlorides, sulfates, nitrates, acetates, etc. Where the mixed oxides are formed by a co-precipitation technique, the intermediate co-precipitates can, after washing, be spray dried or freeze dried to remove the water and then calcined in air at about 500°C to form the end products.

The mixed oxide comprising cerium and zirconium, the mixed oxide can comprise no rare earth elements other than cerium. However, preferably the mixed oxide comprising cerium and zirconium comprises oxides of one or more rare earth metal elements other than cerium wherein, the one or more rare earth metal elements other than cerium can be selected from the group consisting of lanthanum, praseodymium, yttrium and neodymium. Oxides of the rare earth metal elements other than cerium can form from 0.1 to 20 wt% of the mixed oxide comprising cerium oxide and zirconium oxide, such as from 2.5 wt % to 10 wt%, e.g. 3 wt % to 7 wt%, wherein a proportion of zirconium oxide present in the mixed oxide comprising cerium oxide and zirconium oxide can be from 50 wt % to 80 wt%. Preferably, a proportion of zirconium oxide present is greater than a proportion of cerium oxide present in the mixed oxide comprising cerium oxide, zirconium oxide and oxides of one or more one or more rare earth metal elements other than cerium.

A preferred mixed oxide for use in the present invention contains neodymium in addition to ceria and zirconia. Such a mixed oxide can lower the temperatures at which the particulate, and in particular the soot fraction, combusts. Therefore, the incorporation of these mixed oxides containing neodymia can be beneficial in regenerating soot filters containing deposited particulate. While not wishing to be bound by any particular theory, it is believed that the neodymia contributes to the enhanced catalytic effect of the mixed oxides due to the relative ease with which neodymia transfers activated oxygen to the trapped carbonaceous component that comprises the soot fraction, over other rare earth metal oxides.

As described above, preferred mixed oxides of ceria-zirconia that contain neodymia are preferably formed by techniques such as co-gelling and co-precipitation of soluble salts of mixtures of cerium, neodymium and zirconium. It is preferred that all three components are mixed by the above-mentioned techniques so that all three components are dispersed uniformly throughout the composite matrix; however, it is also possible but less preferable to impregnate a ceria-zirconia mixed oxide with a solution of a soluble salt of neodymium, e.g., neodymium nitrate, to load the neodymium component. Impregnation of a preformed ceria-zirconia mixed oxide is disclosed in US patent no. 6423293.

The filter for use in the invention comprises at least one base metal oxide as a support for the or each platinum group metal. The at least one base metal oxide can comprise optionally stabilised alumina, zirconia, silica, titania, silica-alumina, magnesium oxide, hafnium oxide, lanthanum oxide, yttrium oxide and combinations of any two or more thereof. The base metal oxides are typically used in bulk form and generally have a surface area of at least 10 m$^2$/g, and preferably have a surface area of at least 20 m$^2$/g.

As used herein the term "bulk" to refer to base metal oxides such as alumina (or any other component) means that the alumina is present as solid particles thereof. These particles are usually very fine, of the order of at least 90 percent of the particles (i.e. D90) being from about 0.5 to 15 microns in diameter. The term "bulk" is intended to distinguish from the situation in which alumina is "dispersed" on a refractory support material e.g. by being impregnated into the support material from a solution or some other liquid dispersion of the component and then dried and calcined to convert the impregnated aluminium salt to a dispersion of alumina particles on a surface of the refractory support. The resultant alumina is thus "dispersed" onto and, to a greater or lesser extent, within a surface layer of the refractory support. The dispersed alumina is not present in bulk form, because bulk alumina comprises fine, solid particles of alumina. The dispersion can also take the form of a sol, i.e. finely divided particles of e.g. alumina on the nanometer scale. That is, the mixed oxide comprising cerium and zirconium has a median particle size less than $1\mu m$ is not a "bulk" material.

Most preferably, the at least one base metal comprises optionally stabilised (gamma) alumina.

Suitable alumina stabilisers include lanthanum, yttrium, cerium, barium, strontium and praseodymium.

Preferably, when the median particle size of the at least one base metal oxide is >$1\mu m$, i.e. "bulk" material, as defined hereinabove.

Preferably at least some of the mixed oxide comprising cerium and zirconium does not act as a support for the platinum group metal. This can be accomplished by pre-forming a platinum group metal supported on base metal oxide component or platinum group metal supported on base metal oxide component and platinum group metal supported on mixed oxide comprising cerium and zirconium component and blending with the platinum group metal-free mixed oxide comprising cerium and zirconium. An advantage of this arrangement is that gas-phase phosphorus components present in the exhaust gas derived from engine fuel and/or lubricant oil can contact the platinum group metal components supported on base metal oxides, such as alumina-based base metal oxide components, and poison their catalytic activity. It has been found that platinum group metal-free mixed oxide comprising cerium and zirconium components present in a three-way catalyst composition preferentially binds such phosphorus components. Accordingly, the preferred arrangement is more resistant to phosphorus poisoning in use.

It will be understood that a benefit of filters for use in the invention is substantially independent of the porosity of the substrate. Porosity is a measure of the percentage of void space in a porous substrate and is related to backpressure in an exhaust system: generally, the lower the porosity, the higher the backpressure. However, the porosity of filters for use in the present invention are typically >40% or >50% and porosities of 45-75% such as 50-65% or 55-60% can be used with advantage. The mean pore size of the washcoated porous substrate is important for filtration. So, it is possible to have a porous substrate of relatively high porosity that is a poor filter because the mean pore size is also relatively high.

The porous substrate can be a metal, such as a sintered metal, or a ceramic, e.g. silicon carbide, cordierite, aluminium nitride, silicon nitride, aluminium titanate, alumina, mullite e.g., acicular mullite (see e.g. WO 01/16050), pollucite, a thermet such as $Al_2O_3/Fe$, $Al_2O_3/Ni$ or $B_4C/Fe$, or composites comprising segments of any two or more thereof. Preferably, the filter is a wallflow filter comprising a ceramic porous filter substrate having a plurality of inlet channels and a plurality of outlet channels, wherein each inlet channel and each outlet channel is defined in part by a ceramic wall of porous structure, wherein each inlet channel is separated from an outlet channel by a ceramic wall of porous structure. This filter arrangement is also disclosed in SAE 810114, and reference can be made to this document for further details. Alternatively, the filter can be a foam, or a so-called partial filter, such as those disclosed in EP 1057519 or WO 01/080978.

Reasons motivating the coating of a wallflow filter for a diesel application are typically different from that of the present invention. In diesel applications, a washcoat is employed to introduce catalytic components to the filter substrate, e.g. catalysts for oxidising NO to $NO_2$, yet a significant problem is to avoid backpressure issues as soot is accumulated. Accordingly, a balance is struck between the desired catalytic activity and acceptable backpressure. Contrastingly, a primary motivating factor for washcoating a porous substrate for use in the present invention is to achieve both a desired filtration efficiency and catalytic activity.

The first mean pore size e.g. of surface pores of the porous structure of the porous filter substrate can be from 8 to 45$\mu$m, for example 8 to 25$\mu$m, 10 to 20$\mu$m or 10 to 15$\mu$m. Alternatively, the first mean pore size is >18$\mu$m such as from 15 to 45$\mu$m, 20 to 45$\mu$m e.g. 20 to 30$\mu$m, or 25 to 45$\mu$m.

The filter can have a washcoat loading of >15.26 g/L (>0.25 g in$^{-3}$), such as 30.5 g/L (>0.5g in$^{-3}$) or ≥48.8 g/L (≥0.80 g in$^{-3}$), e.g. 48.8 to 183.1 g/L (0.80 to 3.00 g in$^{-3}$). Preferably, the washcoat loading is >61.0 g/L (>1.00 g in$^{-3}$) such as ≥73.2 g/L (≥1.2 g in$^{-3}$), 91.5 g/L (>1.5 g in$^{-3}$), >97.6 g/L (>1.6 g in$^{-3}$) or >122.0 g/L (>2.00 g in$^{-3}$) or for example 97.6 to 146.5 g/L (1.6 to 2.4 g in$^{-3}$). In particular combinations of filter mean pore size and washcoat loading the filter combines a desirable level of particulate filtration and catalytic activity at acceptable backpressure.

According to a second aspect the invention provides a vehicle comprising a positive ignition engine according to the first aspect of the invention.

According to a third aspect, the invention provides the use of a filter comprising a porous substrate having inlet surfaces and outlet surfaces, wherein the porous substrate is coated at least in part with a three-way catalyst washcoat comprising a platinum group metal and a plurality of solid particles, wherein the plurality of solid particles comprises at least one base metal oxide and an oxygen storage component which is a mixed oxide comprising cerium and zirconium having a median particle size less than 1$\mu$m, which mixed oxide is derived from a colloidal suspension of very small solid particles in a continuous liquid medium, wherein the platinum group metal is selected from the group consisting of: (a) platinum and rhodium; (b) palladium and rhodium; (c) platinum, palladium and rhodium; (d) palladium only; or (e) rhodium only, for filtering particulate matter and simultaneously converting oxides of nitrogen to dinitrogen, converting unburned hydrocarbons to carbon dioxide and water and converting carbon monoxide to carbon dioxide, which particulate matter, oxides of nitrogen, carbon monoxide and unburned hydrocarbons are present in exhaust gas emitted from a vehicular positive ignition internal combustion engine.

In order that the invention may be more fully understood, the following Examples are provided by way of illustration only and with reference to the accompanying drawings, in which:

Figure 1 is a graph showing the size distributions of PM in the exhaust gas of a diesel engine. For comparison, a gasoline size distribution is shown at Figure 4 of SAE 1999-01-3530; and

Figure 2 is a bar chart presenting the results of non-methane hydrocarbon, carbon monoxide and oxides of nitrogen conversion activity (represented by emissions of each pollutant in g/km) of four fully formulated three-way catalysts with varying mean particle size of a ceria-zirconia mixed oxide component.

## EXAMPLES

### Reference Example 1

Four three-way catalyst washcoats were prepared, each comprising particulate alumina having a D50 of >1$\mu$m, a particulate ceria-zirconia mixed oxide including a rare earth dopant as an oxygen storage component and available from a commercial source and salts of palladium and rhodium. Each washcoat was coated on a flow through honeycomb substrate of dimensions 132 x 101.6mm, 62 cells cm$^{-2}$ (400 cells per square inch) and wall thickness 0.15mm (6 thousandths of an inch) using techniques described in WO 99/47260. The quantity of palladium salts and of rhodium salts included was such that the loading of palladium in the final product was 0.25 g/l (7 g/ft$^3$) and the loading of rhodium was 0.07 g/l (2 g/ft$^3$).

The difference between each three-way catalyst washcoat was that the particulate ceria-zirconia mixed oxide was "as received" in the first three-way catalyst washcoat (not according to the invention), but in the second, third and fourth washcoats the particulate ceria-zirconia was milled to different grades of fineness before it was combined with the other components of the washcoat. In the first three-way catalyst washcoat, the D50 of the particulate ceria-zirconia was 26.3$\mu$m (not according to the invention). The second three-way catalyst washcoat was wet "flash milled" in a single pass through a milling process sufficient to de-agglomerate individual particles of ceria-zirconia mixed oxide. The D50 of the ceria-zirconia mixed oxide of the second three-way catalyst washcoat was 3.06$\mu$m (not according to the invention). The ceria-zirconia mixed oxide of the third and fourth three-way catalyst washcoats were wet-milled for longer, such that the D50 of the ceria-zirconia mixed oxide used in the third three-way catalyst washcoat was 1.45$\mu$m (not according to the invention) and that of the fourth three-way catalyst washcoat was 1.03$\mu$m (not according to the invention). The coated substrates were inserted each in turn into the exhaust system of a stoichiometrically operated 1.6 Litre gasoline-engined vehicle certified compliant to Euro 4 and the vehicle was run over the European MVEG-B European drive cycle three times and an average taken from the three runs.

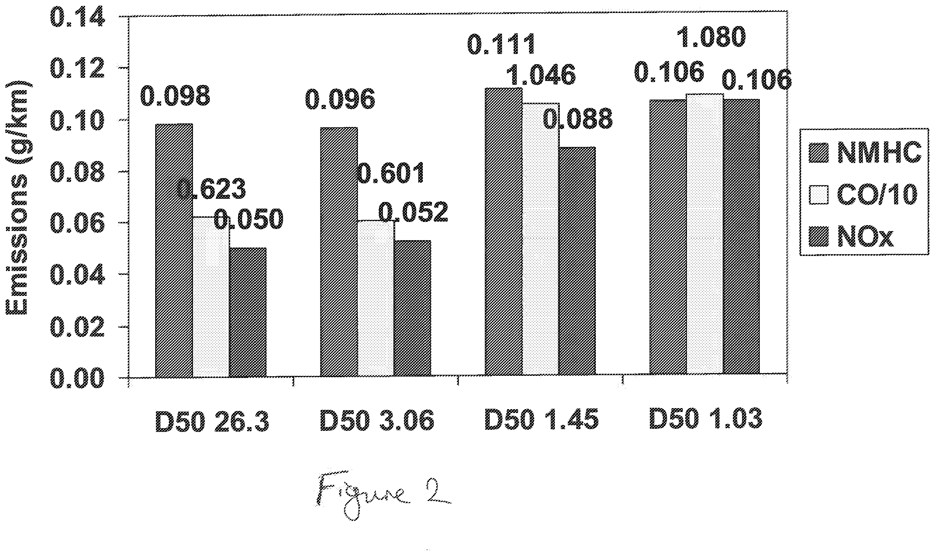

The results are shown in the bar chart in Figure 2, in which non-methane hydrocarbon (NMHC), carbon monoxide (CO) and oxides of nitrogen (NOx) emissions are represented in g/km (the MVEG-A drive cycle is in fact about 4 km long). It should be noted that the values for CO emissions (the middle bar of each data set) is correct, but the bar represents 1/10th (shown as "CO/10" in the legend) of the value determined so that the relative values for NMHC, CO and NOx emissions can be more easily represented in the same bar chart. As can be seen from these results, the emissions from the first and second three-way catalysts are similar, but with a slight improvement in CO emissions. However, the activity of the third and fourth three-way catalysts deteriorates significantly with decreasing mean milled particle size of the ceria-zirconia mixed oxide component.

### Example 2

Two three-way catalyst (TWC) coatings were prepared at a washcoat loading of 97.6 g/L (1.6 g/in$^3$) and a precious metal loading of 1.06g/l (30 g/ft$^3$) (Pt:Pd:Rh 0:9:1); a first comprised particulate alumina and a ceria-zirconia mixed oxide both milled to a d90 <17 $\mu$m (not according to the invention); and a second comprised particulate alumina milled to a d90 <17$\mu$m to which was added a ceria-zirconia mixed oxide sol (D50 <1$\mu$m) in the same weight proportion as the first (according to the invention). In the Table below, the second catalyst is referred to as the "nano dispersion". The coatings were applied to 118.4 x 114.3 mm, 46.5 cells cm$^{-2}$ (300 cells per square inch) cordierite wallflow filter substrates having 0.3mm (12 thousandths of an inch) wall thickness ("300/12") with a nominal average pore size of 20 micrometers (hereinafter "microns") (62% porosity). The catalyst composition was applied as a washcoat to the substrate then dried and calcined in the usual way. The post-calcined catalysed filter is referred to as a "fresh" sample. Each filter was installed in a close-coupled position on a stoichiometrically operated Euro 5 passenger car with a 2.0L turbo charged direct injection gasoline engine. The fresh samples were evaluated over a minimum of three MVEG-B drive cycles. The backpressure differential was determined between sensors mounted upstream and downstream of the filter.

The results are shown in the Table 1 below.

Table 1

| Filter Mixed Oxide | Average BP (Pa) on 70 kph cruise of MVEG-B drive cycle | Peak BP (Pa) during any one MVEG-B drive cycle | Differential pressure at 300 $m^3h^{-1}$ at ambient (Pa) | Differential pressure at 500 $m^3h^{-1}$ at ambient (Pa) |
|---|---|---|---|---|
| Standard mixed oxide | 1780 | 9010 | 3860 | 8510 |
| Nano dispersion | 1030 | 5680 | 2830 | 6530 |

It can be seen from these results that the filter sample comprising the nano dispersion results in a significantly lower back-pressure in use.

The corresponding three-way catalyst activity (simultaneous hydrocarbon conversion, carbon monoxide conversion and oxides of nitrogen conversion) for each of the samples was determined and the results are set out in Table 2 below. The values given are for the temperature "T" for the catalyst conversion to reach 50% (so-called "$T_{50}$", also referred to as "light-off temperature").

Table 2

| | CO $T_{50}$ | HC $T_{50}$ | $NO_x$ $T_{50}$ |
|---|---|---|---|
| Standard mixed oxide | 368°C | 366°C | 365°C |
| Nano dispersion | 365°C | 365°C | 365°C |

From these results it can be seen that the standard sample and the sample according to the invention both have the same light-off temperatures.

Accordingly, this Example shows that filters for use in the present invention show comparable three-way catalyst activity at lower backpressure.

## Claims

1. A positive ignition engine comprising an exhaust system for a vehicular positive ignition internal combustion engine, which exhaust system comprising a filter for filtering particulate matter from exhaust gas emitted from the vehicular positive ignition internal combustion engine, which filter comprising a porous substrate having inlet surfaces and outlet surfaces, wherein the porous substrate is coated at least in part with a three-way catalyst washcoat comprising a platinum group metal and a plurality of solid particles, wherein the plurality of solid particles comprises at least one base metal oxide and an oxygen storage component, which is a mixed oxide comprising cerium and zirconium having a median particle size less than $1\mu m$, which mixed oxide is derived from a colloidal suspension of very small solid particles in a continuous liquid medium, wherein the platinum group metal is selected from the group consisting of:

   (a) platinum and rhodium;
   (b) palladium and rhodium;
   (c) platinum, palladium and rhodium;
   (d) palladium only; or
   (e) rhodium only.

2. A positive ignition engine according to claim 1, wherein the mixed oxide comprising cerium and zirconium has a mean particle size of <500 nm.

3. A positive ignition engine according to claim 1 or 2, wherein a proportion of cerium oxide present in the mixed oxide comprising cerium and zirconium is from 20 wt % to 60 wt % and wherein a proportion of zirconium oxide present in the mixed oxide cerium and zirconium is from 40 wt % to 80wt%.

4. A positive ignition engine according to any one of the preceding claims, wherein the mixed oxide comprising cerium and zirconium comprises one or more rare earth metal elements other than cerium, which is selected from the group consisting of lanthanum, praseodymium, yttrium and neodymium.

5. A positive ignition engine according to any one of the preceding claims, wherein oxides of the rare earth metal elements other than cerium form from 0.1 to 20 wt % of the mixed oxide comprising cerium oxide and zirconium oxide and wherein a proportion of zirconium oxide present in the mixed oxide comprising cerium and zirconium is from 50 wt % to 80 wt%.

6. A positive ignition engine according to any one of the preceding claims, wherein the at least one base metal oxide is optionally stabilised alumina, zirconia, silica, titania, silica-alumina, magnesium oxide, hafnium oxide, lanthanum oxide, yttrium oxide and mixtures, mixed oxides or composite oxides of any two or more thereof.

7. A positive ignition engine according to any preceding claim, wherein the at least one base metal oxide comprises optionally stabilised alumina.

8. A positive ignition engine according to any preceding claim, wherein the median particle size of the at least one base metal oxide is > 1$\mu$m.

9. A positive ignition engine according to any one of the preceding claims, wherein the D90 of the at least one base metal oxide is <20$\mu$m.

10. A positive ignition engine according to any of claims 1 to 6, wherein the D90 of the mixed oxide comprising cerium and zirconium is <750nm.

11. A positive ignition engine according to any one of the preceding claims, wherein the filter is in the form of a wall-flow filter.

12. A positive ignition engine according to any one of the preceding claims, wherein the washcoat loading of the three-way catalyst washcoat on the porous substrate is >30.5g/L (0.50g in$^{-3}$).

13. A vehicle comprising a positive ignition engine according to any one of the preceding claims.

14. The use of a filter comprising a porous substrate having inlet surfaces and outlet surfaces, wherein the porous substrate is coated at least in part with a three-way catalyst washcoat comprising a platinum group metal and a plurality of solid particles, wherein the plurality of solid particles comprises at least one base metal oxide and an oxygen storage component which is a mixed oxide comprising cerium and zirconium having a median particle size less than 1$\mu$m, which mixed oxide is derived from a colloidal suspension of very small solid particles in a continuous liquid medium, wherein the platinum group metal is selected from the group consisting of: (a) platinum and rhodium; (b) palladium and rhodium; (c) platinum, palladium and rhodium; (d) palladium only; or (e) rhodium only, for filtering particulate matter and simultaneously converting oxides of nitrogen to dinitrogen, converting unburned hydrocarbons to carbon dioxide and water and converting carbon monoxide to carbon dioxide, which particulate matter, oxides of nitrogen, carbon monoxide and unburned hydrocarbons are present in exhaust gas emitted from a vehicular positive ignition internal combustion engine.

15. Use according to claim 13, wherein the median particle size of the at least one base metal oxide is >1$\mu$m.

**Patentansprüche**

1. Fremdzündungsmotor, umfassend eine Abgasanlage für einen Kraftfahrzeugverbrennungsmotor mit Fremdzündung, wobei diese Abgasanlage ein Filter zum Filtern von Feststoffen aus Abgas, das von dem Kraftfahrzeugverbrennungsmotor mit Fremdzündung ausgestoßen wird, umfasst, wobei dieses Filter ein poröses Substrat mit Einlassoberflächen und Auslassoberflächen umfasst, wobei das poröse Substrat zumindest zum Teil mit einem Dreiwegekatalysator-Washcoat beschichtet ist, der ein Platingruppenmetall und eine Vielzahl von festen Teilchen umfasst, wobei die Vielzahl von festen Teilchen mindestens ein Basismetalloxid und eine Sauerstoffspeicherkomponente umfassen, die ein Mischoxid, umfassend Cer und Zirkonium, mit einer mittleren Teilchengröße von weniger als 1 $\mu$m ist, wobei dieses Mischoxid von einer kolloidalen Suspension von sehr kleinen festen Teilchen in einem kontinuierlichen flüssigen Medium abgeleitet ist, wobei das Platingruppenmetall ausgewählt ist aus der Gruppe bestehend aus:

(a) Platin und Rhodium;
(b) Palladium und Rhodium;
(c) Platin, Palladium und Rhodium;
(d) nur Palladium oder
(e) nur Rhodium.

2. Fremdzündungsmotor nach Anspruch 1, wobei das Mischoxid, umfassend Cer und Zirkonium, eine mittlere Teilchengröße von < 500 nm aufweist.

3. Fremdzündungsmotor nach Anspruch 1 oder 2, wobei ein Anteil von Ceroxid, das in dem Mischoxid, umfassend Cer und Zirkonium, vorliegt, von 20 Gew.-% bis 60 Gew.-% beträgt und wobei ein Anteil von Zirkoniumoxid, das in dem Mischoxid von Cer und Zirkonium vorliegt, von 40 Gew.-% bis 80 Gew.-% beträgt.

4. Fremdzündungsmotor nach einem der vorhergehenden Ansprüche, wobei das Mischoxid, umfassend Cer und Zirkonium, ein oder mehrere Seltenerdmetallelemente umfasst, bei denen es sich nicht um Cer handelt und die aus der Gruppe bestehend aus Lanthan, Praseodym, Yttrium und Neodym ausgewählt sind.

5. Fremdzündungsmotor nach einem der vorhergehenden Ansprüche, wobei Oxide der Seltenerdmetallelemente, bei denen es sich nicht um Cer handelt, von 0,1 bis 20 Gew.-% des Mischoxids, umfassend Ceroxid und Zirkoniumoxid, bilden und wobei ein Anteil von Zirkoniumoxid, das in dem Mischoxid, umfassend Cer und Zirkonium, vorliegt, von 50 Gew.-% bis 80 Gew.-% beträgt.

6. Fremdzündungsmotor nach einem der vorhergehenden Ansprüche, wobei es sich bei dem mindestens einen Basismetalloxid um optional stabilisiertes Aluminiumoxid, Zirkoniumdioxid, Siliciumdioxid, Titandioxid, Siliciumdioxid-Aluminiumoxid, Magnesiumoxid, Hafniumoxid, Lanthanoxid, Yttriumoxid und Gemische, Mischoxide oder Verbundoxide von beliebigen zwei oder mehr davon handelt.

7. Fremdzündungsmotor nach einem vorhergehenden Anspruch, wobei das mindestens eine Basismetalloxid optional stabilisiertes Aluminiumoxid umfasst.

8. Fremdzündungsmotor nach einem vorhergehenden Anspruch, wobei die mittlere Teilchengröße des mindestens einen Basismetalloxids > 1 $\mu$m beträgt.

9. Fremdzündungsmotor nach einem der vorhergehenden Ansprüche, wobei der D90 des mindestens einen Basismetalloxids < 20 $\mu$m beträgt.

10. Fremdzündungsmotor nach einem der Ansprüche 1 bis 6, wobei der D90 des Mischoxids, umfassend Cer und Zirkonium, < 750 nm beträgt.

11. Fremdzündungsmotor nach einem der vorhergehenden Ansprüche, wobei das Filter in der Form eines Wandflussfilters ist.

12. Fremdzündungsmotor nach einem der vorhergehenden Ansprüche, wobei die Washcoat-Beladung des Dreiwegekatalysator-Washcoats auf dem porösen Substrat > 30,5 g/L (0,50 g/in$^{-3}$) beträgt.

13. Kraftfahrzeug, umfassend einen Fremdzündungsmotor nach einem der vorhergehenden Ansprüche.

14. Verwendung eines Filters, das ein poröses Substrat mit Einlassoberflächen und Auslassoberflächen umfasst, wobei das poröse Substrat zumindest zum Teil mit einem Dreiwegekatalysator-Washcoat beschichtet ist, der ein Platingruppenmetall und eine Vielzahl von festen Teilchen umfasst, wobei die Vielzahl von festen Teilchen mindestens ein Basismetalloxid und eine Sauerstoffspeicherkomponente umfassen, die ein Mischoxid, umfassend Cer und Zirkonium, mit einer mittleren Teilchengröße von weniger als 1 $\mu$m ist, wobei dieses Mischoxid von einer kolloidalen Suspension von sehr kleinen festen Teilchen in einem kontinuierlichen flüssigen Medium abgeleitet ist, wobei das Platingruppenmetall ausgewählt ist aus der Gruppe bestehend aus: (a) Platin und Rhodium; (b) Palladium und Rhodium; (c) Platin, Palladium und Rhodium; (d) nur Palladium oder (e) nur Rhodium, zum Filtern von Feststoffen und gleichzeitigen Umwandeln von Stickstoffoxiden in Distickstoff, Umwandeln von nicht verbrannten Kohlenwasserstoffen in Kohlendioxid und Wasser und Umwandeln von Kohlenmonoxid in Kohlendioxid, wobei diese Feststoffe, diese Stickstoffoxide, dieses Kohlenmonoxid und diese nicht verbrannten Kohlenwasserstoffe in Abgas vorliegen, das von einem Kraftfahrzeugverbrennungsmotor mit Fremdzündung ausgestoßen wird.

15. Verwendung nach Anspruch 13, wobei die mittlere Teilchengröße des mindestens einen Basismetalloxids > 1 $\mu$m beträgt.

**Revendications**

1. Moteur à allumage commandé comprenant un système d'échappement pour un moteur à combustion interne à allumage commandé de véhicule, lequel système d'échappement comprenant un filtre pour filtrer une matière particulaire du gaz d'échappement émis par le moteur à combustion interne à allumage commandé de véhicule, lequel filtre comprenant un substrat poreux ayant des surfaces d'entrée et des surfaces de sortie, dans lequel le substrat poreux est revêtu au moins en partie d'une couche d'imprégnation catalytique à trois voies comprenant un métal du groupe du platine et une pluralité de particules solides, dans lequel la pluralité de particules solides comprend au moins un oxyde de métal de base et un composant de stockage d'oxygène, qui est un oxyde mixte comprenant du cérium et du zirconium ayant une granulométrie médiane inférieure à 1 $\mu$m, lequel oxyde mixte est dérivé d'une suspension colloïdale de très petites particules solides dans un milieu liquide continu, dans lequel le métal du groupe du platine est choisi dans le groupe constitué par :

   (a) le platine et le rhodium ;
   (b) le palladium et le rhodium ;
   (c) le platine, le palladium et le rhodium ;
   (d) le palladium uniquement ; ou
   (e) le rhodium uniquement.

2. Moteur à allumage commandé selon la revendication 1, dans lequel l'oxyde mixte comprenant du cérium et du zirconium a une granulométrie moyenne < 500 nm.

3. Moteur à allumage commandé selon la revendication 1 ou 2, dans lequel une proportion de l'oxyde de cérium présent dans l'oxyde mixte comprenant du cérium et du zirconium est de 20% en poids à 60% en poids et dans lequel une proportion de l'oxyde de zirconium présent dans l'oxyde mixte comprenant du cérium et du zirconium est de 40% en poids à 80% en poids.

4. Moteur à allumage commandé selon l'une quelconque des revendications précédentes, dans lequel l'oxyde mixte comprenant du cérium et du zirconium comprend un ou plusieurs élément(s) métallique(s) de terres rares autre(s) que le cérium, qui est/sont choisi(s) dans le groupe constitué par le lanthane, le praséodyme, l'yttrium et le néodyme.

5. Moteur à allumage commandé selon l'une quelconque des revendications précédentes, dans lequel des oxydes des éléments métalliques de terres rares autres que le cérium forment 0,1 à 20% en poids de l'oxyde mixte comprenant de l'oxyde de cérium et de l'oxyde de zirconium et dans lequel une proportion de l'oxyde de zirconium présent dans l'oxyde mixte comprenant du cérium et du zirconium est de 50% en poids à 80% en poids.

6. Moteur à allumage commandé selon l'une quelconque des revendications précédentes, dans lequel l'au moins un oxyde de métal de base est de l'alumine éventuellement stabilisée, de la zircone, de la silice, du dioxyde de titane, de la silice-alumine, de l'oxyde de magnésium, de l'oxyde d'hafnium, de l'oxyde de lanthane, de l'oxyde d'yttrium et des mélanges, des oxydes mixtes ou des oxydes composites de deux quelconques ou plus de ceux-ci.

7. Moteur à allumage commandé selon l'une des revendications précédentes, dans lequel l'au moins un oxyde de métal de base comprend de l'alumine éventuellement stabilisée.

8. Moteur à allumage commandé selon l'une des revendications précédentes, dans lequel la granulométrie médiane de l'au moins un oxyde de métal de base est > 1 $\mu$m.

9. Moteur à allumage commandé selon l'une quelconque des revendications précédentes, dans lequel la D90 de l'au moins un oxyde de métal de base est < 20 $\mu$m.

**10.** Moteur à allumage commandé selon l'une des revendications 1 à 6, dans lequel la D90 de l'oxyde mixte comprenant du cérium et du zirconium est < 750 nm.

**11.** Moteur à allumage commandé selon l'une quelconque des revendications précédentes, dans lequel le filtre se présente sous la forme d'un filtre à écoulement sur paroi.

**12.** Moteur à allumage commandé selon l'une quelconque des revendications précédentes, dans lequel la charge de couche d'imprégnation de la couche d'imprégnation catalytique à trois voies sur le substrat poreux est > 30,5 g/L (0,50 g in$^{-3}$).

**13.** Véhicule comprenant un moteur à allumage commandé selon l'une quelconque des revendications précédentes.

**14.** Utilisation d'un filtre comprenant un substrat poreux ayant des surfaces d'entrée et des surfaces de sortie, dans laquelle le substrat poreux est revêtu au moins en partie d'une couche d'imprégnation catalytique à trois voies comprenant un métal du groupe du platine et une pluralité de particules solides, dans laquelle la pluralité de particules solides comprend au moins un oxyde de métal de base et un composant de stockage d'oxygène qui est un oxyde mixte comprenant du cérium et du zirconium ayant une granulométrie médiane inférieure à 1 $\mu$m, lequel oxyde mixte est dérivé d'une suspension colloïdale de très petites particules solides dans un milieu liquide continu, dans laquelle le métal du groupe du platine est choisi dans le groupe constitué par : (a) le platine et le rhodium ; (b) le palladium et le rhodium ; (c) le platine, le palladium et le rhodium ; (d) le palladium uniquement ; ou (e) le rhodium uniquement, pour filtrer une matière particulaire et convertir simultanément des oxydes d'azote en diazote, convertir des hydrocarbures non brûlés en dioxyde de carbone et en eau et convertir le monoxyde de carbone en dioxyde de carbone, lesquels matière particulaire, oxydes d'azote, monoxyde de carbone et hydrocarbures non brûlés sont présents dans le gaz d'échappement émis par un moteur à combustion interne à allumage commandé de véhicule.

**15.** Utilisation selon la revendication 13, dans laquelle la granulométrie médiane de l'au moins un oxyde de métal de base est > 1 $\mu$m.

FIG. 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060133969 A
- US 20090193796 A
- US 2011252773 A
- US 5057483 A
- US 5898014 A
- US 6423293 B
- WO 0116050 A
- EP 1057519 A
- WO 01080978 A
- WO 9947260 A